# EUROPÄISCHE PATENTSCHRIFT

(11) **EP 2 275 295 B1**
(45) Veröffentlichungstag und Bekanntmachung des Hinweises auf die Patenterteilung: **19.12.2018**
(21) Anmeldenummer: 10006487.2
(22) Anmeldetag: 22.06.2010
(51) Int. Cl.: B60J 5/06, B60J 5/04

(54) **Tür für einen Kraftwagen**
Door for a motor vehicle
Porte pour un véhicule automobile

(30) Priorität: 14.07.2009 DE 102009032864
(43) Veröffentlichungstag der Anmeldung: 19.01.2011
(73) Patentinhaber: Daimler AG, 70327 Stuttgart (DE)
(72) Erfinder: Seba, Christoph, 68165 Mannheim (DE); Wegert, Thomas, 42551 Velbert (DE)
(74) Vertreter: JENSEN & SON

(56) Entgegenhaltungen:
- EP-A1- 1 277 607
- EP-A1- 1 770 236
- WO-A1-03/104005
- DE-A1- 19 735 181
- DE-A1- 19 901 016
- FR-A1- 2 804 380
- US-A- 3 982 601

## Beschreibung

Die Erfindung betrifft eine Tür für einen Kraftwagen nach dem Oberbegriff von Patentanspruch 1.

Bekannten Türen für Kraftwagen, insbesondere für Omnibusse, sind beispielsweise als 2-flügelige Schwenkschiebetüren ausgebildet, welche zu einer Außenseite des Kraftwagens hin ausstellbar und entlang einer korrespondierenden Türöffnung verschiebbar sind. So ist aus der DE 197 35 181 A1 eine gattungsgemäße Schwenkschiebetür mit zumindest einem Türblatt bekannt, das mittels eines Schwenkgetriebes aus einer Türöffnung herausschwenkbar und mittels Verschiebeantriebs in der ausgeschwenkten Position wenigsten teilweise in eine parallel zur Türöffnung verlaufende Öffnungsposition neben der Türöffnung verfahrbar ist.

Die bekannten Lösungen weisen allerdings den Nachteil auf, dass sie nicht in einem vorderen Bereich des Kraftwagens bzw. des Omnibusses einsetzbar sind, da die Türflügel parallel zu einer Seitenwand des Kraftwagens verschiebbar sind und zumindest ein Türflügel mit einem Außenspiegel und/oder mit einem eingeschlagenen Vorderrad des Kraftwagens kollidieren würde.

Es ist daher Aufgabe der vorliegenden Erfindung, eine Tür für einen Kraftwagen der eingangs genannten Art derart weiter zu entwickeln, dass eine Kollision mit einem Außenspiegel und/oder mit einem Vorderrad des Kraftwagens vermeidbar ist.

Diese Aufgabe wird durch eine Tür mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Die erfindungsgemäße Tür, welche zwischen einer eine Türöffnung des Kraftwagens verschließenden Schließstellung und einer die Türöffnung freigegebenen Offenstellung zu einer Außenseite der Türöffnung ausstellbar und mittels einer Führungseinrichtung entlang der Türöffnung verschiebbar ist, zeichnet sich erfindungsgemäß dadurch aus, dass die Führungseinrichtung ein Führungselement umfasst, mittels welchem die Tür bei ihrer Bewegung zwischen der Schließstellung und der Offenstellung in eine Position bringbar ist, in welcher sie einen Winkel mit einer im Wesentlichen parallel zu der Türöffnung verlaufenden Ebene einschließt. Die Tür ist dabei mittels des Führungselements zumindest in ihrer Schließstellung bzw. kurz vor Erreichen dieser oder aber auch während der gesamten Bewegung in die besagte Position verbringbar, in welcher sie einen Winkel mit der genannten Ebene einschließt. Hierdurch wird beispielsweise eine Kollision der Tür mit einem Außenspiegel des Kraftwagens und/oder mit einem eingeschlagenen Rad vermieden.

Somit ist die erfindungsgemäße Tür insbesondere als eine vordere Tür eines Omnibusses einsetzbar, bei welchem die beschriebene Problematik besonders immanent ist.

Hierbei ist das Führungselement als schwenkbar gelagerter Schwenkhebel ausgebildet, welcher auf der einer Schiebeführung der Führungseinrichtung abgewandten Seite der Tür gelagert ist. Mit der besagten Seite der Tür ist dabei eine Breitseite gemeint, welche in Türhochrichtung verläuft. Diese Ausgestaltungsform des Führungselement erlaubt die beschriebene Position der Tür mit allen in diesem Zusammenhang bereits beschriebenen Vorteilen bei gleichzeitiger kostenunaufwendigen Herstellbarkeit der Tür, was damit auch Gesamtkosten des Kraftwagens zuträglich ist.

Dadurch, dass das Führungselement einen ersten Längenbereich aufweist, welcher in der Schließstellung der Tür im Wesentlichen senkrecht zu der parallel zu der Türöffnung verlaufenden Ebene verläuft, und das Führungselement einen zweiten Längenbereich aufweist, welcher einenends mit der Tür verbunden ist und welcher mit dem ersten Längenbereich einen um 180° verschiedenen Winkel, insbesondere einen Winkel kleiner als 90° einschließt, so birgt dies den Vorteil, dass das Führungselement einen nur geringen Bauraum benötigt und somit nicht sehr weit in einen Fahrgastraum des Kraftwagens hineinragt, wodurch eine negative Beeinträchtigung eines Aufenthaltsraums des Fahrgastraums, beispielsweise in Form eines Stehplatzes, vermieden ist.

Eine vorteilhafte Ausführungsform der Erfindung sieht vor, dass die Tür mittels zumindest einer Lagerstelle an einer Schiebeführung der Führungseinrichtung zur Verschiebung der Tür entlang der Türöffnung gelagert ist, welche ein Drehgelenk umfasst. Diese Lagerstelle mit dem Drehgelenk, dessen Drehachse parallel zu der besagten, parallel zur Türöffnung verlaufenden Ebene und senkrecht zu einer Verschiebungsrichtung der Tür bei deren Verbringung von der Schließstellung in die Offenstellung verläuft, erlaubt also die beschriebene Verbringung der Tür in die Position,
in welcher sie einen Winkel mit der parallel zu der Tür verlaufenden Ebene einschließt. Die Lagerstelle bedeutet somit eine einfache und kostengünstige Lagerung der Tür in Folge einer geringen Teileanzahl.

Ist die Tür mittels zumindest einer Lagerstelle an der Schiebeführung, beispielsweise einer Führungsschiene, der Führungseinrichtung gelagert, wobei diese Lagerstelle ein Langloch aufweist, so ist dies insbesondere in Zusammenhang mit der Lagerstelle mit dem Drehgelenk insofern vorteilbehaftet, als somit eine besonders stabile und damit langlebige Lagerung der Tür an der Führungsschiene möglich ist bei gleichzeitiger Darstellung der besagten Verbringung der Tür in die Position, in welcher sie einen Winkel mit der parallel zu der Tür verlaufenden Ebene einschließt. Bei Vorsehen zweier Lagerstellen, also einer Lagerstelle mit dem Drehgelenk und einer Lagerstelle mit dem Langloch, sind diese Lagerstellen in Verschiebungsrichtung der Tür voneinander beabstandet, wobei beispielsweise die näher zu dem Führungselement positionierte Lagerstelle das Langloch und dementsprechend die andere Lagerstelle das Drehgelenk umfasst.

An dieser Stelle sei angemerkt, dass nicht nur die Tür verschiebbar an besagter Schiebeführung, insbesondere der Führungsschiene, gelagert ist, sondern dass auch das Führungselement, insbesondere der Schwenkhebel, einenends mit der Tür verbunden und relativ zu dieser verschiebbar gelagert ist, während er andernends verschwenkbar an dem Kraftwagen bzw. an einem Holm lagerbar ist.

Die beschriebenen Vorteile der erfindungsgemäßen Tür kommen insbesondere bei einem Einsatz der Tür in Verbindung mit einer Schwenkschiebetür für einen Kraftwagen, insbesondere für einen Omnibus, zum Tragen, wobei die Schwenkschiebetür zumindest zwei Türflügel umfasst, wobei zumindest einer der Türflügel als eine erfindungsgemäße Tür ausgebildet ist. Gerade bei einem Einsatz dieser Schwenkschiebetür als vordere Einstiegstür des Omnibusses ist insbesondere die Ausbildung des Türflügels, welcher näher zu einem Außenspiegel des Omnibusses positioniert ist, als erfindungsgemäße Tür vorteilbehaftet, da dadurch eine Kollision mit dem Außenspiegel und/oder mit einem eingeschlagenen Rad des Omnibusses vermeidbar ist.

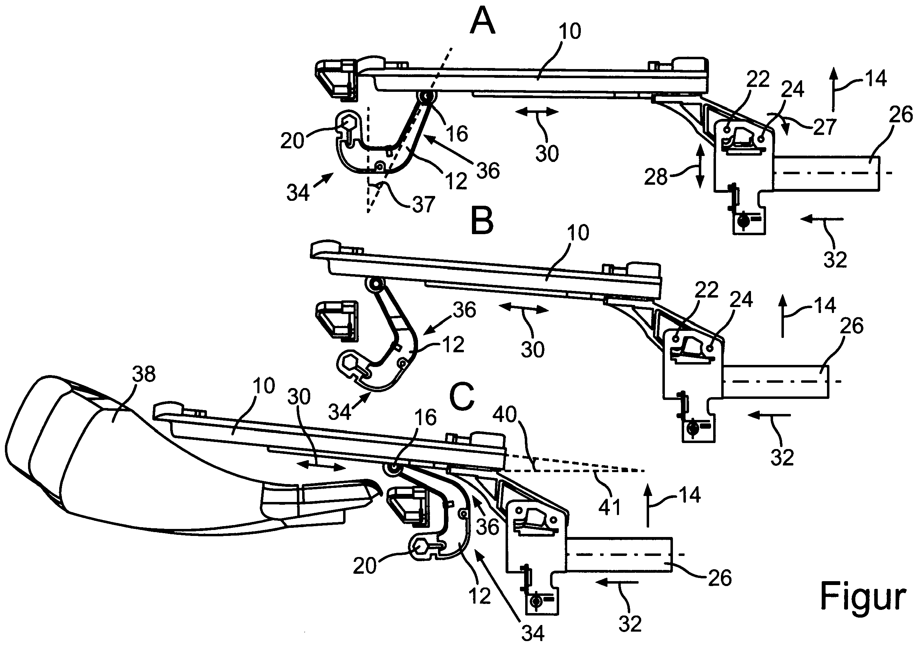

Weitere Vorteile, Merkmale und Einzelheiten der Erfindung ergeben sich aus der nachfolgenden Beschreibung eines bevorzugten Ausführungsbeispiels sowie anhand der Zeichnung.

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Figur zeigt drei Längsschnittansichten einer Schwenkschiebetür eines Omnibusses in einer eine Türöffnung des Omnibusses verschließenden Schließposition, in einer Zwischenposition und in einer die Türöffnung freigebenden Offenposition.

Die Figur zeigt eine Schwenkschiebetür 10 für einen Omnibus, welche sich gemäß Darstellung A in einer eine Türöffnung des Omnibusses verschließenden Schließstellung, gemäß Darstellung B in einer Zwischenstellung und gemäß Darstellung C in einer die Türöffnung freigebenden Offenstellung befindet.

Zur Verbringung der Schwenkschiebetür 10 ist diese durch einen Schwenkhebel 12 zu einer Außenseite der Türöffnung gemäß einem Richtungspfeil 14 hin verschwenkbar, wobei der Schwenkhebel 12 einenends über eine Lagerstelle 16 mit der Schwenkschiebetür 10 drehbar und relativ zu ihr verschiebbar und andernends über eine Lagerstelle 20 an einem nicht dargestellten Holm des Omnibusses gelagert ist.

Die Schwenkschiebetür 10 ist über zwei Lagerstellen 22 und 24 an einer Führungsschiene 26 einer Führungseinrichtung gelagert, wobei diese Führungseinrichtung den Schwenkhebel 12 sowie die Führungsschiene 26 umfasst.

Die Lagerstelle 22 weist ein Langloch auf, welches eine Verschiebung der Schwenkschiebetür 10 gemäß einem Richtungspfeil 28 erlaubt. Die Lagerstelle 24 umfasst ein Drehgelenk, welches eine Drehung der Schwenkschiebetür 10 gemäß einem Pfeil 27 um die Lagerstelle 24 ermöglicht.

Wie der Figur deutlich zu entnehmen ist, gleitet die Lagerstelle 16 bei einer Verbringung der Schwenkschiebetür 10 von ihrer Schließstellung gemäß Darstellung A in ihre Offenstellung gemäß Darstellung C gemäß einem Richtungspfeil 30 an der Schwenkschiebetür 10 entlang. Gleichzeitig gleitet die Schwenkschiebetür 10 an der Führungsschiene 26 der Führungseinrichtung gemäß einem Richtungspfeil 32 entlang. Parallel zu dieser Verschiebung der Schwenkschiebetür 10 findet ein Verschwenken der Schwenkschiebetür 10 gemäß dem Richtungspfeil 14 statt, welches durch den Schwenkhebel 12 ermöglicht wird.

Der Schwenkhebel 12 weist einen Längenbereich 34 auf, welcher in der Schließstellung der Schwenkschiebetür 10 im Wesentlichen senkrecht zu einer im Wesentlichen parallel zu der Türöffnung verlaufenden Ebene 41 verläuft. Zudem weist der Schwenkhebel 12 einen zweiten Längenbereich 36 auf, welcher mit dem ersten Längenbereich 34 einen Winkel 37 von deutlich kleiner als 90° einschließt, wodurch die Schwenkschiebetür 10 in ihrer Offenstellung gemäß Darstellung C mit der parallel zur Türöffnung verlaufenden Ebene 41 einen Winkel 40 einschließt. Durch diese Position ist eine Kollision der Schwenkschiebetür 10 mit einem Außenspiegel 38 des Omnibusses sowie eine etwaige Kollision mit einem eingeschlagenen Vorderrad desselbigen vermeidbar. Die beschriebenen Ausführungsform der Lagerstellen 22 und 24 ermöglichen dabei diese Bewegung der Schwenkschiebetür 10 bei gleichzeitiger fester Lagerung der Schwenkschiebetür 10 an der Führungsschiene 26.

## Patentansprüche

1. Tür (10), insbesondere Schwenkschiebetür (10), für einen Kraftwagen, welche zwischen einer eine Türöffnung des Kraftwagens verschließenden Schließstellung und einer die Türöffnung freigebenden Offenstellung zu einer Außenseite der Türöffnung hin ausstellbar und mittels einer Führungseinrichtung entlang der Türöffnung verschiebbar ist, wobei
die Führungseinrichtung ein Führungselement (12) umfasst, mittels welchem die Tür (10) aus einer Schließstellung in eine Offenstellung bringbar ist, wobei das Führungselement (12) als schwenkbar gelagerter Schwenkhebel (12) ausgebildet ist, welcher auf der einer Schiebeführung (26) der Führungseinrichtung abgewandten Seite der Tür (10) gelagert ist, und wobei das Führungselement (12) einen ersten Längenbereich (34) aufweist, welcher in der Schließstellung der Tür (10) im Wesentlichen senkrecht zu der parallel zu der Türöffnung verlaufenden Ebene (41) verläuft, und welcher einen zweiten Längebereich (36) aufweist,
welcher einenends über eine Lagerstelle (16) mit der Tür (10) drehbar und relativ zu ihr verschiebbar verbunden ist und welcher mit dem ersten Längenbereich (34) einen von 180° verschiedenen Winkel (37), insbesondere einen Winkel (37) kleiner als 90°, einschließt
**dadurch gekennzeichnet, dass**
die Tür (10) in der Offenstellung in einer Position ist, in welcher sie einen Winkel (40) mit einer parallel zu der Türöffnung verlaufenden Ebene (41) einschließt und die Tür (10) mittels zumindest einer Lagerstelle (22) an einer Schiebeführung (26) der Führungseinrichtung gelagert ist, welche ein Langloch aufweist.

2. Tür (10) nach einem der vorhergehenden Ansprüche,
**dadurch gekennzeichnet, dass**
die Tür (10) mittels zumindest einer Lagerstelle (24) an einer Schiebeführung (26) der Führungseinrichtung gelagert ist, welche ein Drehgelenk umfasst.

3. Schwenkschiebetür für einen Kraftwagen, insbesondere einen Omnibus, mit zumindest zwei Türflügeln, wobei zumindest einer der Türflügel als eine Tür (10) nach einem der vorhergehenden Ansprüche ausgebildet ist.

## Claims

1. Door, in particular plug door (10), for a motor vehicle, which door can be moved between a closed position closing a door opening of the motor vehicle and an open position releasing the door opening towards an outside of the door opening, and which door can slide along the door opening by means of a guide device, wherein
the guide device comprises a guide element (12), by means of which the door (10) can be brought from a closed position into an open position, wherein the guide element (12) is designed as a pivotably mounted swivelling lever (12) located on the side of the door remote from a sliding guide (26) of the guide device, and wherein
the guide element (12) has a first longitudinal region (34), which extends substantially perpendicularly to the plane (41) extending parallel to the door opening in the closed position of the door (10), and a second longitudinal region (36),
one end of which is rotatably connected to the door (10) via a bearing point (16) and displaceable relative to the door (10), and which encloses with the first longitudinal region (34) an angle (37) which is different from 180°, in particular an angle (37) of less than 90°,
**characterised in that** in the open position the door (10) is in a position in which it encloses an angle (40) with a plane (41) extending parallel to the door opening, and **in that** the door (10) is mounted on a sliding guide (26) - having a slot - of the guide device by means of at least one bearing point (22).

2. Door according to any of the preceding claims,
**characterised in that**
the door (10) is mounted on a sliding guide (26) - comprising a pivot joint - of the guide device.

3. Plug door for a motor vehicle, in particular a bus, with at least two wings, wherein at least one of the wings is designed as a door according to any of the preceding claims.

## Revendications

1. Porte (10), en particulier porte louvoyante-coulissante, pour un véhicule automobile, qui peut se présenter entre une position fermée fermant une ouverture de porte de véhicule automobile et une position ouverte libérant l'ouverture de porte vers un côté extérieur de l'ouverture de porte et qui peut se coulisser au moyen d'un dispositif de guidage le long de l'ouverture de porte,
le dispositif de guidage comprenant un élément de guidage (12) au moyen duquel la porte (10) peut être amenée d'une position fermée à une position ouverte, l'élément de guidage (12) étant conçu sous la forme d'un levier articulé (12) monté en pivotement, qui est installé sur le côté de la porte (10) en regard d'un guidage coulissant (26) du dispositif de guidage, et l'élément de guidage (12) présentant une première zone de longueur (34) qui s'étend dans la position fermée de la porte (10) sensiblement perpendiculairement à la parallèle par rapport à l'ouverture de porte, et qui présente une seconde zone de longueur (36),
qui d'une part peut tourner autour d'un point d'appui (16) avec la porte et y étant reliée par coulissement et qui forme avec la première zone de longueur (34) un angle différent (37) de 180°, en particulier un angle (37) inférieur à 90°,
**caractérisée en ce que** la porte (10) dans la position ouverte est dans une position dans laquelle elle forme un angle (40) ayant un plan (41) parallèle à l'ouverture de la porte et la porte (10) est montée au moins au moyen d'un point d'appui (22) sur un guidage coulissant (26) du dispositif de guidage qui présente un trou oblong.

2. Porte (10) selon l'une quelconque des revendications précédentes, **caractérisée en ce que** la porte (10) est montée au moyen d'au moins un point d'appui (24) sur un guidage coulissant (26) du dispositif de guidage qui comprend une articulation.

3. Porte louvoyante-coulissante pour un véhicule automobile, en particulier pour un autobus, comprenant au moins deux vantaux de porte, au moins l'un des vantaux étant conçu sous la forme d'une porte (10) selon l'une quelconque des revendications précédentes.
